# EUROPEAN PATENT SPECIFICATION

(11) **EP 2 677 335 B1**
(45) Date of publication and mention of the grant of the patent: **05.10.2022**
(21) Application number: 12172912.3
(22) Date of filing: 21.06.2012
(51) Int. Cl.: G01S 5/00, G01S 5/02

(54) **Improving positioning accuracy of location tracking system**
Verbesserung der Positionierungsgenauigkeit eines Standortverfolgungssystems
Amélioration de la précision de positionnement de système de suivi d'emplacement

(43) Date of publication of application: 25.12.2013
(73) Proprietor: 9Solutions Oy, 90590 Oulu (FI)
(72) Inventor: Pesonen, Arto, 90590 Oulu (FI)
(74) Representative: Kolster Oy Ab

(56) References cited:
- EP-A2- 2 154 546
- US-A1- 2003 087 647
- US-A1- 2006 075 131
- US-A1- 2008 318 591

## Description

### Field

The invention relates to the technical field of location tracking systems.

### Background

Prior art teaches several types of location tracking systems. Satellite based tracking systems, e.g. Global Positioning System (GPS), are probably the most common location tracking systems. However, their problem is that they are not suitable for indoor location tracking, because GPS signals do not penetrate building walls. For indoors location tracking, prior art teaches systems that utilize a pico network of wireless base stations, and the location of a given person in the coverage area of the pico network is determined on the basis of which wireless base station currently serves a personal communication device of the person. Other prior art systems rely on radio frequency identification technology or other radio communication technology, wherein a plurality of nodes disposed throughout an area are used to track locations of mobile devices.

US 2006/075131 discloses a solution for determining the location of a radio tag or client station of a wireless network, and the location of coverage holes by receiving from a plurality of wireless stations of the wireless network path loss information of the path loss of one or more location frames received at the respective wireless stations. The location frames transmitted by the radio tag or client station having a pre-defined frame structure. The radio tags and client stations use a common infrastructure for transmitting a location frame configured for radiolocation by path loss measurement. The common infrastructure includes a pre-defined protocol common for both radio tags and client stations for transmitting information for reception by the plurality of stations of the wireless network for radiolocation. The pre-defined protocol includes using the location frame having the pre-defined frame structure.

US 2008/318591 discloses a system records the movement of people carrying mobile devices within a specific area. A plurality of receivers distributed throughout the specified area monitor the area for wireless communication from a mobile device. Mobile devices are identified by way of a unique identifier, e.g. IMSI, IMEI, MAC address, or similar transmitted on a control channel or the like. Whenever such wireless communication is detected, the direction from which the signal is received is detected. The position of the mobile device (and hence the person carrying it) may be calculated by triangulating results from two or more receiving devices, and the results stored.

EP2154546 discloses a method for determining the position of a mobile station in a cellular network. It comprises the steps of providing (210) a plurality of radio parameters of the mobile station measured when the mobile station is located at a certain position and estimating (250) the position of the mobile station by comparing the measured radio parameters to a plurality of vectors of radio parameters in a positioning matrix, wherein each of the plurality of vectors is linked to positioning coordinates. The positioning matrix has been previously built based on measurement reports of a plurality of radio parameters of mobile stations, measured when the mobile stations are located at a certain position and positioning coordinates of the mobile stations determined with the aid of an external positioning system, such as GPS.; Vectors of the measured radio parameters are created in the positioning matrix and linked to the positioning coordinates.

US2003087647 discloses a system for determining location of a mobile communications device obtains data for that purpose by monitoring signalling links in a communications network supporting the device. Data from signalling messages concerning propagation of signals between the device and the network are enhanced by the addition of data from other kinds of messages to facilitate use of the propagation data in determining the device's location.

### Brief description

According to an aspect of the present invention, there is provided a method as specified in claim 1, a location tracking apparatus as specified in claim 13, and a computer program product as specified in claim 14.

Embodiments of the invention are defined in the dependent claims.

### List of drawings

Embodiments of the present invention are described below, by way of example only, with reference to the accompanying drawings, in which
Figure 1 illustrates an example of an indoor location tracking system comprising fixed location tracking system nodes and mobile tags;
Figure 2 illustrates an example of a communication topology in the system of Figure 1;
Figure 3 illustrates a method for processing radio measurement reports in a location tracking apparatus according to an embodiment of the invention; detected, the direction from which the signal is received is detected. The position of the mobile device (and hence the person carrying it) may be calculated by triangulating results from two or more receiving devices, and the results stored.

EP2154546 discloses a method for determining the position of a mobile station in a cellular network. It comprises the steps of providing (210) a plurality of radio parameters of the mobile station measured when the mobile station is located at a certain position and estimating (250) the position of the mobile station by comparing the measured radio parameters to a plurality of vectors of radio parameters in a positioning matrix, wherein each of the plurality of vectors is linked to positioning coordinates. The positioning matrix has been previously built based on measurement reports of a plurality of radio parameters of mobile stations, measured when the mobile stations are located at a certain position and positioning coordinates of the mobile stations determined with the aid of an external positioning system, such as GPS.; Vectors of the measured radio parameters are created in the positioning matrix and linked to the positioning coordinates.

US2003087647 discloses a system for determining location of a mobile communications device obtains data for that purpose by monitoring signalling links in a communications network supporting the device. Data from signalling messages concerning propagation of signals between the device and the network are enhanced by the addition of data from other kinds of messages to facilitate use of the propagation data in determining the device's location.

### Brief description

According to an aspect of the present invention, there is provided a method as specified in claim 1, a location tracking apparatus as specified in claim 11, and a computer program product as specified in claim 12.

Embodiments of the invention are defined in the dependent claims.

### List of drawings

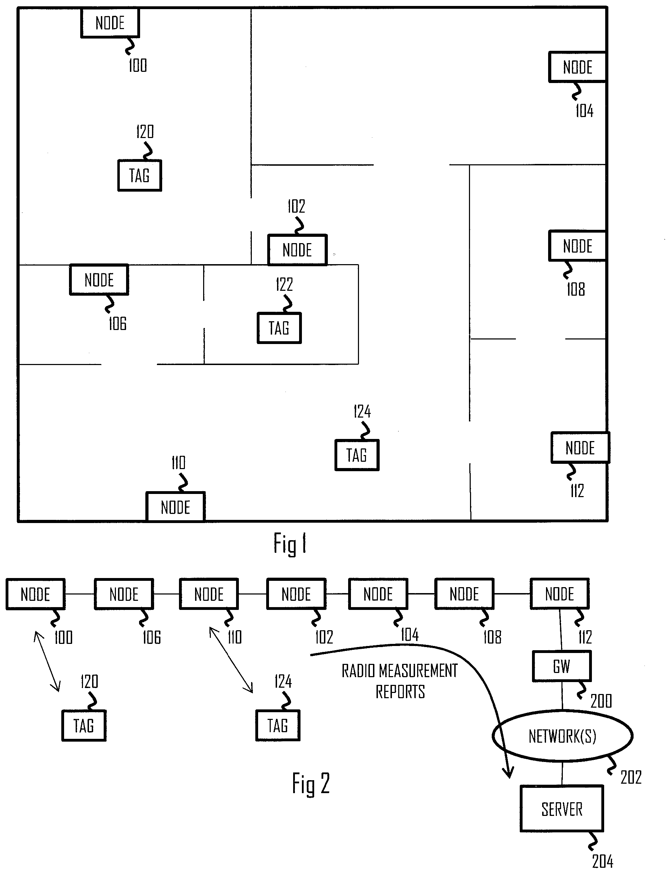

Embodiments of the present invention are described below, by way of example only, with reference to the accompanying drawings, in which
Figure 1 illustrates an example of an indoor location tracking system comprising fixed location tracking system nodes and mobile tags;
Figure 2 illustrates an example of a communication topology in the system of Figure 1;

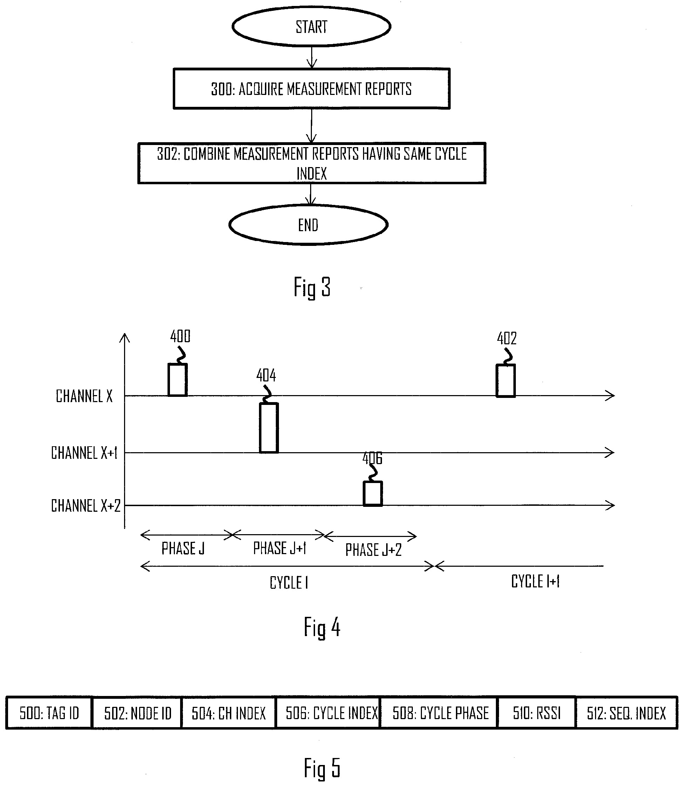

Figure 3 illustrates a method for processing radio measurement reports in a location tracking apparatus according to an embodiment of the invention;
Figure 4 illustrates an embodiment for transmitting reference signals in a location tracking system according to an embodiment of the invention;
Figure 5 illustrates contents of a radio measurement report according to an embodiment of the invention;

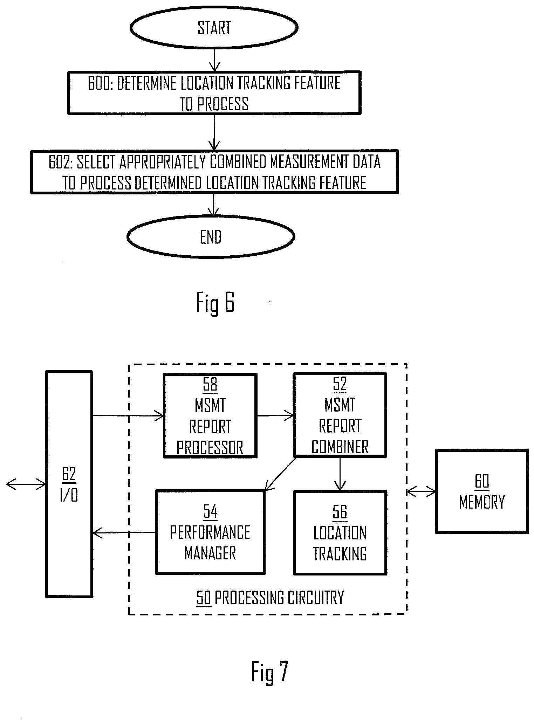

Figure 6 illustrates a process for combining the radio measurement reports according to an embodiment of the invention; and
Figure 7 illustrates a block diagram of an apparatus according to an embodiment of the invention.

### Description of embodiments

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments.

Figure 1 illustrates an exemplary layout of an indoor area to which embodiments of a location tracking system (LTS) may be applied. The embodiments are particularly suitable for indoor location tracking, but the invention may equally be utilized in outdoor applications. The layout of Figure 1 illustrates a number of rooms with doors illustrated by discontinuations in the room walls, and a hallway providing access from one room to another. People inside the building that are being location-tracked are represented by their user equipment or, as from now on called, mobile tags 120, 122, 124. The mobile tag 120 to 124 may be an apparatus dedicated to the location tracking but, in general, the apparatus comprising the mobile tag 120 to 124 may have other functionalities. For example, the apparatus comprising the mobile tag may be a cellular phone, a palm computer, or any other portable electronic device. In some embodiments where the LTS uses Bluetooth communication capability, the apparatus may be any Bluetooth or Bluetooth Low Energy capable device. The same analogy applies to radio access schemes other than the Bluetooth.

The location tracking is enabled by disposing a plurality of location tracking nodes (or LTS nodes) 100 to 112 throughout the area where the location tracking is to be carried out. The LTS nodes 100 to 112 may be radio communication devices, each configured to provide a coverage area effectively defined by transmission power and receiver sensitivity, for example, and the combined coverage areas of the LTS nodes 100 to 112 may be designed to cover the location tracking area. The LTS nodes 100 to 112 may also form a fixed or static network infrastructure enabling data routing between the nodes 100 to 112 and through the nodes 100 to 112. Figure 2 illustrates an embodiment of such a network infrastructure. Referring to Figure 2, the network topology may be a pipeline topology where an arbitrary LTS node communicates with one or two neighbouring LTS nodes such that the LTS nodes form a pipelined structure. Other topologies are equally possible but the topology may be static or at least semi-static to enable reliable data transfer with low signalling and processing overhead. In some embodiments, the network topology may change dynamically in a self-organizing manner. The LTS nodes 100 to 112 may be provided with a backup mechanism in preparation for one or more LTS nodes breaking and falling off from the network. An example of such a mechanism is providing an LTS node with an identifier of an auxiliary LTS node to which the LTS node connects to if it detects that one of its neighbouring LTS nodes has dropped from the network.

A location tracking apparatus or a module that may be comprised in a server 204 may be connected to the network of LTS nodes 100 to 112 directly or through a gateway node 200, and the location tracking apparatus may be configured to maintain locations of tracked objects and control the location tracking and other features of the LTS. In addition to the gateway node 200, one or more computer and/or communication networks 202 may be provided between the LTS nodes 100 to 112 and the server 204. The server 204 and the location tracking apparatus may be realized by a computer provided with suitable communication equipment so as to enable a communication connection with the LTS nodes 100 to 112. The server 204 may be connected to the gateway node 200 via an Internet Protocol (IP) connection, and the router may be configured to connect to the fixed network of LTS nodes 100 to 112 through another connection type. The connection in the fixed network of LTS nodes 100 to 112 may be established by using radio connections according to a Bluetooth technology, but it should be understood that other radio communication schemes may be used as well, e.g. IEEE 802.11, radio frequency identification (RFID), or Zigbee.

The locations of objects are tracked by tracking movement of tags 120 to 124 attached to the objects. As examples of the tags 120 to 124, a user tag may be carried by a person, and an asset tag may be attached to an asset. The asset may be any mobile or portable apparatus that is wanted to be tracked, e.g. a wheelchair, a computer, or expensive industrial testing equipment. The asset tag may equally be attached to a fixed apparatus, e.g. a safe, a projector, in order to detect attempted robbery. The different tags 120 to 124 whose movement and location are tracked may be called generally mobile tags, although some of the tags 120 to 128 may actually be in a substantially fixed position. The location tracking may be based on a scheme where a mobile tag is configured to detect the closest LTS node and to transmit to the server 204 periodically a message comprising an identifier of the mobile tag and an identifier of the detected closest LTS node, or a plurality of detected LTS nodes. The message may be routed through the fixed network of LTS nodes 100 to 112 to the server 204. As the server 204 is provided with information on fixed locations of the LTS nodes 100 to 112, e.g. in a layout of the area, the server 204 is able to associate the mobile tag with the LTS node on the basis of the received message and, thus, determine the location of the mobile tag and the object associated with the mobile tag. In another embodiment, an LTS node is configured to detect mobile tags in its coverage area and transmit periodically identifiers of detected mobile tags to the server 204. Similarly, the server 204 may then determine the location of each mobile tag on the basis of the LTS nodes that have detected the mobile tag. The detection of the LTS nodes or mobile tags may be based on Bluetooth Low Energy (BTLE) advertising procedure. The LTS may, however, utilize another location tracking scheme and/or another communication scheme.

The apparatus carrying out the detection and reporting to the server, e.g. an LTS node detecting mobile tags or a mobile tag detecting LTS nodes, may be configured in a detection procedure to report a closest detected apparatus (as determined by the highest estimated reception power), a determined number of closest detected apparatuses, or all the detected apparatuses. The detection may include at least one threshold in the apparatus reporting the detection, e.g. a LTS node or a mobile tag. The threshold may be a rapid detection threshold, and a mobile tag may be configured to estimate a received signal strength indicator (RSSI) or another metric proportional to a reception power for a signal received from an LTS node. If the RSSI exceeds the rapid detection threshold, the mobile tag may instantly link to the LTS node without waiting for further signals from other LTS nodes. This speeds up the positioning and reduces operations carried out in the mobile tag, thereby also reducing power consumption. If the RSSI is below the rapid detection threshold, the mobile tag may be configured to continue the detection procedure by attempting to detect other LTS nodes and then collectively transmit to the server a message comprising identifiers of the detected LTS nodes. The operation is similar when the LTS attempts to detect the mobile tags and applies the rapid detection threshold. Another example of the threshold is a discarding threshold, wherein those apparatuses that are detected but whose RSSI is below the discarding threshold are discarded from the report. This eliminates reporting and possible positioning to LTS nodes that are far from the mobile tag.

As described above, the location tracking may be based on the LTS nodes 100 to 112 and/or the mobile tags 120 to 124 transmitting radio signals and the mobile tags and/or the LTS nodes receiving the radio signals, respectively, and then reporting the detected LTS nodes and/or mobile tags to the server. The reports are called herein radio measurement reports and, as shown in Figure 2, the radio measurement reports may be routed to the server 204 through multiple networks 202. The server 204 may even be located on another side of the world and, as a result of network congestion, processing delays, etc. the radio measurement reports related to the same radio signal transmission may arrive at the server 204 at different times. In some cases, a radio measurement report related to transmission of a radio signal with a first transmission timing may arrive at the server 204 at the same time with another radio measurement report related to transmission of a radio signal with a second transmission timing. This may cause unreliable operation in the location tracking.

Figure 3 illustrates a general procedure for processing radio measurement reports in the location tracking apparatus comprised in the server 204. Referring to Figure 3, the process comprises acquiring (block 300) a plurality of radio measurement reports related to transmission of reference signals between a mobile tag 120 to 124 being location-tracked and at least one location tracking node 100 to 112 having a fixed location within a location tracking area. Each radio measurement report comprises at least a cycle index indicating a transmission cycle index of a reference signal associated with the radio measurement report and a radio measurement metric computed from said reference signal associated with the radio measurement report.

In block 302, the location tracking apparatus combines radio measurement reports having the same transmission cycle index. The combined radio measurement reports may then be used in tracking the location of the mobile tag. The combined radio measurement reports may be used in determining the location of the mobile tag in the above-described manner or in configuring parameters of the mobile tag(s) and/or at least one LTS node 100 to 112.

The location tracking apparatus accumulates the radio measurement reports for a determined time period before starting the combining. The location tracking apparatus starts a timer counting the time period, receive the radio measurement reports within the time period and, upon expiry of the timer, start the combining process. Any radio measurement report having the same transmission cycle index as those being combined and received after the expiry of the timer are discarded. The timer may operate in a sliding window manner, e.g. a plurality of timers may be operational in parallel. The location tracking apparatus may be synchronized to the transmission cycle index of the LTS start the timer of a transmission cycle index when the index starts, and have the timer to expiry a determined time period after the end of the transmission cycle. For example, if the timer expires at the end of a subsequent transmission cycle, two timers may be operational at a time.

In an embodiment, the radio measurement metric comprises the above-described identifier of a transmitter of the reference signal detected by a device transmitting the radio measurement report, e.g. an identifier of an LTS node whose reference signal a mobile tag has detected and reported with the radio measurement report. In another embodiment, the radio measurement metric comprises a measurement value indicating a reception quality of the reference signal associated with the radio measurement report. The measurement value may be a received signal strength indicator (RSSI) of the received reference signal, a signal-to-noise power ratio (SNR) of the received reference signal, or another metric. The radio measurement report comprises both the transmitter of the reference signal and the measurement value. These radio measurement metrics are used in the positioning of the mobile tag in the above-described manner, e.g. the identifier of the transmitter of the reference signal may be used in determining LTS nodes the mobile tag is able to detect (or LTS nodes able to detect the mobile tag) while the measurement value may be used as an estimate of a distance between the mobile tag and at least one LTS node. The radio measurement metrics may also be used in determining the coverage area of the LTS and the LTS nodes, which enables the location tracking apparatus to adjust transmission powers of the LTS nodes, when coverage needs to be improved. On the other hand, the measurement values indicate that coverage areas of LTS nodes overlap too much, the transmission powers may be reduced. Additionally, the radio measurement report may comprise an identifier of the reporting device, i.e. the transmitter of the radio measurement report.

Let us now consider some embodiments for transmitting the reference signal. In some embodiments, the LTS nodes 100 to 112 transmit the reference signals and the mobile tags 120 to 124 transmit the radio measurement reports to the server 204, while in other embodiments the mobile tags 120 to 124 transmit the reference signals and the LTS nodes 100 to 112 transmit the radio measurement reports to the server 204. In yet other embodiments, both the LTS nodes and the mobile tags transmit the reference signal and report to the server 204.

The reference signal may be an advertising signal or a scanning signal, and it may be transmitted periodically, wherein the periodicity is defined by the transmission cycle. The LTS may employ a continuously progressing transmission cycle index, and at least transmitters of the reference signals (LTS nodes and/or mobile tags) may be synchronized to the transmission cycle index. The transmission cycle index may be included in messages comprising the reference signal in order to enable the receiver of the reference signal to determine the transmission cycle index. In embodiments where the receivers are also synchronized to the transmission cycle index, the transmission cycle index may be omitted from the messages comprising the reference signal, but the transmission cycle index may still be included in the radio measurement reports in order to enable the location tracking apparatus to parse the radio measurement reports related to the same transmission cycle.

The reference signal may have an arbitrary waveform and it may carry information such as the identifier of the transmitter of the reference signal. In some embodiments where the reference signal is used for channel estimation, the waveform of the reference signal may be known to the receiver(s) of the reference signal.

Figure 4 illustrates an embodiment for transmitting the reference signals. The transmitter of the reference signal may employ a determined transmission pattern in the transmission of the reference signal, and the transmission pattern may be periodic. The pattern may repeat in consecutive transmission cycles or the period may be longer than the transmission cycle, e.g. a multiple of N transmission cycles where N>1. When the LTS employs frequency hopping, e.g. Bluetooth, the transmission pattern may define a frequency hopping pattern, e.g. a timing for transmitting a reference signal or a part of the reference signal on a determined frequency channel. Figure 4 illustrates such an example of such a frequency hopping where the transmitter transmits a first reference signal 400 on a first channel X, a second reference signal 404 on a second channel X+1, and a third reference signal 406 on a third channel X+2 within the same transmission cycle I. In the next transmission cycle 1+1, the transmitter repeats the pattern by transmitting a subsequent reference signal 402 again on the first channel 402. The location tracking apparatus may be configured to combine the radio measurement reports having the same channel index in order to improve the accuracy of the radio measurement reports related to the same channel. For example, the channel-specific combination corrects non-linearities of radio circuits. When the transmitter transmits the reference signal multiple times on the same channel within the same transmission cycle, measurement values of these measurement reports may be added together or averaged, because it may be assumed that the channel environment does not change within one transmission cycle. In some embodiments, measurement values of measurement reports related to the same channel and consecutive transmission cycles are added together or averaged for the same reason.

As shown in Figure 4, the transmission cycle may be divided into sub-phases called transmission cycle phases, and the transmitter may be configured to transmit a single reference signal during each transmission cycle phase, e.g. reference signals 400 to 406 are all transmitted in different transmission cycle phases, wherein the reference signals 400, 404, 406 are transmitted on transmission cycle phases J, J+1, J+2 of the same transmission cycle I, while the reference signals 400, 402 are transmitted in the same transmission cycle phase of different transmission cycles. In addition to the transmission cycle, the transmission cycle phase may also be included in the radio measurement report, and the location tracking apparatus may combine radio measurement reports having the same transmission cycle index and the same transmission cycle phase in order to improve the time resolution.

In an embodiment, duration of the transmission cycle is around 100-1000 milliseconds (ms). It should be appreciated that some tolerance may be applied to the length because or random or pseudorandom intervals applied to transmissions in some systems, e.g. Bluetooth. In another embodiment, the duration of the transmission cycle is equal to or less than a few seconds, e.g. 2 seconds. In yet another embodiment, the duration of the transmission cycle is equal to or higher than 100 ms. In an embodiment, the duration of the transmission cycle phase is 100 ms. An additional 0-10 ms tolerance may be applied to the duration. In another embodiment, the duration of the transmission cycle phase is 10 ms. In another embodiment, the duration of the transmission cycle phase is equal to or less than 110 ms. In an embodiment, each transmission cycle comprises ten transmission cycle phases. In an embodiment, the transmitter of the reference signal may employ a variable transmission power in the transmission of the reference signals 400 to 406, and the transmission pattern may define a transmission power pattern for use in the transmission of the reference signals 400 to 406. The transmission power pattern may be linked to the transmission cycle and/or transmission cycle phase. Accordingly, the receiver of the reference signal is able to determine the transmission power of each reference signal it detects from the contents of the reference signal or from the synchronization to the same transmission cycle as the transmitter. The use of the variable transmission power of the reference signal enables fast detection of suitable transmission power levels of signals used for location tracking. Thus, the coverage area of the LTS may be adapted to a changing radio environment rapidly. The transmitter may utilize the variable transmission power when transmitting the reference signal and a static or semi-static transmission power when transmitting positioning signals used for the positioning of the mobile tags. The location tracking apparatus may determine the appropriate transmission power for the positioning signals on the basis of radio measurement reports related to the reference signals transmitted with the variable transmission power. This may be carried out by determining the transmission power of the transmitters such that the coverage area of the LTS does not include outage areas and such that the coverage area is not too high. In another embodiment, the reference signals are the positioning signals as well, and the location tracking apparatus may adjust an average transmission power of the reference signals transmitted by an LTS node or a mobile tag while maintaining the transmission power pattern. The location tracking apparatus may maintain a database indicating the transmission power levels of each mobile tag and LTS node.

In an embodiment using the channel index and the variable transmit power, the location tracking apparatus may combine measurement values derived from the radio measurement reports that have the same transmit channel index regardless of whether the reference signals of those measurement reports have been transmitted with the same or different transmission powers. The combined measurement values may be path loss values or other values from which the variable effect of the transmission power has been removed and, with the assumption of the same or similar channel within the transmission cycles and/or cycle phases being combined, the combining improves the accuracy.

It should be appreciated that Figure 4 is highly simplified expression of the functionality of some embodiments of the invention provided for the sake of clarity. In other embodiments, each transmission cycle phase comprises multiple transmissions from the same transmitter. The multiple transmissions within the same transmission cycle phase may all be transmitted with the same transmission power, and/or the transmission power may be varied between the consecutive transmission cycle phases. The multiple transmissions within the same transmission cycle phase may follow a frequency-hopping pattern such that each transmission is carried out on a different channel or, in general, the multiple transmissions are carried out on multiple channels.

In an embodiment, the transmitter indicates a transmission sequence it currently uses for the reference signal in the message comprising the reference signal. This indication may be provided in the form of a transmission sequence index included in the message. The transmission sequence index may indicate the frequency hopping pattern or, in general, a time-frequency pattern and/or the transmission power pattern for the reference signal such that the receiver may monitor appropriate channel(s) at the right time and/or compute path loss or another metric requiring the transmission power. The transmission sequence index may indicate the whole sequence instead of which part of the sequence is currently being transmitted. The receiver may acquire the time-frequency-power pattern for all the transmissions from a single index, because the transmission sequence may be bounded to the transmission cycle, e.g. the transmission sequence repeats at every X transmission cycles.

Let us now consider contents of the radio measurement report with reference to Figure 5. Figure 5 illustrates the structure of the radio measurement report. It should be appreciated that the radio measurement report may additionally comprise any protocol header information needed in communicating the radio measurement report from the LTS node or mobile tag to the server 204. The radio measurement report may comprise at least the transmission cycle index 506 derived from the message carrying the reference signal or from the reception timing of the reference signal. Additionally, the report may comprise an identifier of the transmitter of the report, e.g. a tag identifier 500 or a node identifier 502. The radio measurement report may also comprise a channel index 504 indicating the channel on which the reference signal associated with the report has been received. The measurement report may also comprise a transmission cycle phase index 508 indicating the transmission cycle phase during which the reference signal associated with the report has been received. Additionally, the radio measurement report may comprise the measurement value 510, e.g. the RSSI of the received reference signal and/or a path loss estimate. The radio measurement report may also comprise the above-mentioned transmission sequence index 512 acquired by the reporting device from the received message carrying the reference signal. When a plurality of measurements are reported with a single radio measurement report, the radio measurement report may comprise a separate transmitter index 500 or 502 indicating the transmitter of the reference signal, channel index 504, cycle index 506, cycle phase index 508, and measurement value 510 may be provided for each reference signal transmission being reported. Naturally, there may be only a single identifier of the reporting device.

The location tracking apparatus may be provided with information on the transmission power pattern and its link to the, channel index, transmission cycle and/or transmission cycle phase. In some embodiments, the transmission sequence index 512 may indicate the transmission power pattern. It may even replace at least the channel index 504 and the cycle phase index 508 in the radio measurement report. The location tracking apparatus may then determine the transmission power of the reference signal from the channel index 504, cycle index 506, and/or cycle phase index 508 and determine the path loss from the transmission power and the measurement value 501 for use in the positioning and the configuration of the operational parameter.

The above-described combining of the radio measurement reports may comprise at least one of the following: using contents of the combined measurement reports separately when determining the location of the mobile tag or parameters of the LTS; and combining the contents of the radio measurement reports, e.g. a plurality of measurement values into a single combined measurement value. The actual combining used may depend on the process carried out by the location tracking apparatus, and different processes may require different type of combining. Let us now consider some embodiments for realizing the combining for the different processes with reference to Figure 6 and Table 1 below. Referring to Figure 6, the location tracking apparatus determines a location tracking feature to carry out, e.g. determine the location of the mobile tag or operational parameters of at least one mobile tag and/or at least one LTS node. In block 602, the location tracking apparatus then selects radio measurement reports that have been combined in such manner that it complies with the determined location tracking feature to be carried out. In an embodiment, block 602 comprises carrying out the combining of the radio measurement reports in said manner. In another embodiment, the combining with multiple different manners is carried out beforehand so that the combined radio measurement reports are readily available before block 600.

Let us now consider some embodiments for carrying out the combining of measurement reports according to a criterion other than the transmission cycle index. Below Table 1 lists different location tracking features carried out by the location tracking apparatus and associated basis for carrying out the combining of the radio measurement reports.

**Table 1**

| **Location tracking feature** | **Combined contents** |
|---|---|
| Tag positioning and/or speed estimation | Combine reports with same tag identifier |
| | Combine measurement values with same transmitter identifier (LTS node or tag) and channel index |
| | Combine reports with same transm<ission cycle phase |
| LTS coverage optimization | Combine measurement values with same transmitter identifier (LTS node or tag) and receiver identifier |
| | Combine measurement reports with same receiver identifier (LTS node or tag) |
| | Combine measurement reports with same transmitter identifier (LTS node or tag) |

Referring to Table 1 with respect to the tag positioning, the location tracking apparatus may combine the radio measurement reports comprising the same tag identifier because they contain measurement data related to the tag itself. These radio measurement reports may contain information on the LTS nodes with which the tag is within a communication range, information relating to the distance between the tag and each LTS node indicated in the combined reports (e.g. the RSSI and transmission powers of the reference signal enabling estimation of a radio distance in the form of a path loss), etc. The measurement values of radio measurement reports containing the same transmitter identifier may be used to improve the accuracy of the measurement, e.g. through averaging. The radio measurement reports having the same transmission cycle phase may be combined to improve temporal resolution of the positioning and/or speed estimation. Computing the location of the tag at different transmission cycle phases enables speed estimation, and the speed estimate may be improved with the estimation of the distance between the tag and each LTS node within its communication range.

Referring to Table 1 with respect to the LTS coverage optimization, the measurement values, e.g. RSSI or path loss values, associated with the same transmitter-receiver pair may be combined (or averaged) to improve the accuracy. The variable transmission power of the reference signals may be used in determining a signal level with which the connection is lost, e.g. a receiver of the reference signal can no longer detect a transmitter of the reference signal. The measurement reports with the same receiver identifier may be combined in order to determine the transmitters each receiver is able to detect within the same transmission cycle. For example, let us assume a situation where the LTS nodes transmit the reference signals. It may be preferable that a mobile tag is able to detect at least two LTS nodes. If the mobile tag reports the detection of only one LTS node, the location tracking apparatus may determine that the coverage area of the LTS nodes is not sufficient and increase the transmission power of at least one LTS node. The same applies to the embodiments where the mobile tags transmit the reference signals: in this case the location tracking apparatus may combine the measurement reports having the same transmitter identifier.

In an embodiment, the LTS nodes may be configured to scan for reference signals transmitted by other LTS nodes and report the detected reference signals to the location tracking apparatus. The location tracking apparatus may then use the radio measurement reports in managing the coverage of the LTS. For example, the location tracking apparatus may maintain a database specifying for each LTS node those other LTS nodes that it should be able to detect. Upon discovering that the LTS node reports additional LTS nodes, the transmission power of such other LTS nodes may be decreased. On the other hand, upon discovering that the LTS node is not able to detect another LTS node that it should detect, the transmission power of that other LTS node may be increased.

Figure 7 illustrates a block diagram of a structure of an apparatus according to an embodiment of the invention. The apparatus may form the location tracking apparatus configured to monitor the location of the mobile tags. The location tracking apparatus may also configure the operational parameters of the LTS. The apparatus may be comprised in the server 204, and the apparatus may be realized by at least one processor or a processing circuitry 50, at least one memory 60, and a computer program causing the apparatus to function as the location tracking apparatus. The apparatus may further comprise an input/output (I/O) interface 62 providing the apparatus with a communication connection with the LTS nodes and/or the mobile tags. The I/O interface 62 may comprise standard physical components required for supporting at least one communication protocol needed in the communication, e.g. Internet protocol, Ethernet protocol, transport control protocol, user datagram protocol, and hypertext transport protocol. The I/O interface 62 may be configured to receive the radio measurement reports and to transmit configuration parameters to the LTS nodes and/or mobile tags under the control of the processing circuitry 50.

The processing circuitry may comprise a measurement report processor 58 configured to extract contents of the received radio measurement reports. The measurement report processor may output the extracted contents to a measurement report combiner circuitry 52 configured to combine either the reports into report bundles and/or to combine at least some of the measurement values within a report bundle, as described above. One combining criterion is the transmission cycle index and other, additional combining criteria may be used. The measurement report combiner 52 may be configured to carry out one or more types of combining for the performance management and one or more types of combining for the location tracking. The measurement report combiner may carry out all different types of combining and store the combined report bundles into the memory or input report bundles reated to location tracking to a location tracking circuitry 56 and report bundles related to the performance management to a performance manager circuitry 54. The performance manager circuitry 54 and the location tracking circuitry 56 may then acquire the report bundle(s) and carry out the performance management and positioning in the above-described manner. The performance manager circuitry 54 may output configuration parameters to the I/O interface 62, if it determines that the operational parameters of the LTS should be modified. The location tracking circuitry 56 may output an estimated location of one or more mobile tags into a location tracking database stored in the memory 60.

In an embodiment, the location tracking apparatus is the mobile tag. The mobile tag may be a portable device such as a mobile phone or a tablet computer, for example. The I/O interface 62 may then be understood as a software interface, e.g. an application programming interface, through which the measurement report processor circuitry receives the measurement reports originated from the LTS node(s) and/or contents of the measurement reports derived internally in the mobile tag from reference signals received from the LTS node(s). In this embodiment, the mobile tag may determine its location after combining the contents of the measurement reports according to an embodiment of the invention and, then, transmit its location to the server 204. In this embodiment, the performance manager circuitry may be omitted from the location tracking apparatus.

As used in this application, the term 'circuitry' refers to all of the following: (a) hardware-only circuit implementations, such as implementations in only analog and/or digital circuitry, and (b) to combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) to circuits, such as a microprocessor(s) or a portion of a microprocessor(s), that require software or firmware for operation, even if the software or firmware is not physically present. This definition of 'circuitry' applies to all uses of this term in this application. As a further example, as used in this application, the term "circuitry" would also cover an implementation of merely a processor (or multiple processors) or portion of a processor and its (or their) accompanying software and/or firmware. The term "circuitry" would also cover, for example and if applicable to the particular element, a baseband integrated circuit or applications processor integrated circuit for a server or, in general, the location tracking apparatus.

The processes or methods described in connection with Figures 2 to 6 may also be carried out in the form of a computer process defined by a computer program. The computer program may be in source code form, object code form, or in some intermediate form, and it may be stored in some sort of carrier, which may be any transitory or non-transitory entity or device capable of carrying the program. Such carriers include a record medium, computer memory, read-only memory, electrical carrier signal, telecommunications signal, and software distribution package, for example. Depending on the processing power needed, the computer program may be executed in a single electronic digital processing unit or it may be distributed amongst a number of processing units. As the present invention comprises features in the location tracking apparatus, the access control apparatus, and the mobile tag, each apparatus may be provided with a processor configured by a separate computer program product.

It will be obvious to a person skilled in the art that, as technology advances, the inventive concept can be implemented in various ways. The invention and its embodiments are not limited to the examples described above but may vary within the scope of the claims.

## Claims

1. A method for processing radio measurement reports in a location tracking apparatus (204), the method comprising:
acquiring (300) a plurality of radio measurement reports related to transmission of reference signals between a mobile tag (120, 124) being location-tracked and at least one location tracking node (100, 102, 104, 106, 108, 110, 112) having a fixed location within a location tracking area, wherein each radio measurement report comprises a transmission cycle index indicating a transmission cycle of a reference signal associated with the radio measurement report and a radio measurement metric computed from said reference signal associated with the radio measurement report;
**characterized in that** the mobile tag and the at least one location tracking node operate according to Bluetooth technology, and the radio measurement report comprises an identifier of a transmitter and an identifier of a receiver of a reference signal associated with the radio measurement report, and the method further comprising:
combining (302), after an expiry of a timer counting an acquisition period defining a maximum duration allowed for acquisition of the plurality of measurement reports, radio measurement reports having the same transmission cycle index, the same transmitter identifier, and the same receiver identifier;
discarding any radio measurement report received after the expiry of the timer and having the same transmission cycle index as those being combined; and
using the combined radio measurement reports in tracking the location of the mobile tag.

2. The method of claim 1, wherein each radio measurement report further comprises an identifier of a mobile tag, the method further comprising combining the radio measurement metrics contained in radio measurement reports having the same identifier of the mobile tag.

3. The method of claim 1 or 2, wherein each radio measurement report further comprises a channel index indicating on which channel the reference signal associated with the radio measurement report has been transmitted, the method further comprising combining the radio measurement metrics contained in radio measurement reports having the same channel index.

4. The method of any preceding claim, wherein the reference signals are transmitted with a variable transmit power such that the transmit power varies between cycle phases of each transmission cycle, and wherein each radio measurement report further comprises a cycle phase index indicating a phase in the transmission cycle indicated by the transmission cycle index, the method further comprising combining the radio measurement metrics contained in radio measurement reports having the same cycle phase index.

5. The method of claim 1 or 2, wherein the reference signals are transmitted with a variable transmit power such that the transmit power varies within the transmission cycle, and wherein each radio measurement report further comprises a channel index indicating on which channel the reference signal associated with the radio measurement report has been transmitted, the method further comprising combining the radio measurement metrics contained in radio measurement reports having the same channel index and associated with different transmit powers.

6. The method of any preceding claim, wherein the radio measurement metric comprises at least one of the following: a received signal strength indicator, a path loss estimate, and a signal-to-noise ratio.

7. The method of any preceding claim, wherein the duration of the transmission cycle is between 100 milliseconds and two seconds.

8. The method of any preceding claim, wherein the combined radio measurement metrics are used in estimating location of the mobile tag, estimating speed of the mobile tag, and/or configuring operational parameters of at least one location tracking node and/or at least one mobile tag.

9. The method of any preceding claim, wherein the reference signal is associated with a transmission sequence index defining a transmission pattern of the reference signal, and wherein the radio measurement report comprises the transmission sequence index, the method further comprising carrying out the combining of the radio measurement reports by using the transmission sequence index.

10. The method of any preceding claim, wherein the radio measurement report also indicates transmission timing of the reference signal associated with the radio measurement report in the form of the transmission cycle index, channel index, transmission sequence index, and/or the transmission cycle phase index, the method further comprising combining the radio measurement reports associated with the same transmission timing and estimating a speed of the mobile tag on the basis of the combined radio measurement reports.

11. A location tracking apparatus comprising:
at least one processor (50); and
at least one memory (60) including a computer program code, **characterized in that** the at least one memory and the computer program code are configured, with the at least one processor, to cause the location tracking apparatus to carry out the steps of any preceding claim 1 to 10.

12. A computer program product embodied on a distribution medium readable by a computer and comprising program instructions which, when loaded into an apparatus, execute the method according to any preceding claim 1 to 10.

## Patentansprüche

1. Verfahren zum Verarbeiten von Funkmessberichten in einer Standortverfolgungsvorrichtung (204), wobei das Verfahren Folgendes umfasst:
Erfassen (300) einer Vielzahl von Funkmessberichten, die eine Übertragung von Referenzsignalen zwischen einem mobilen Tag (120, 124), dessen Standort verfolgt wird, und mindestens einem Standortverfolgungsknoten (100, 102, 104, 106, 108, 110, 112) mit einem festen Standort innerhalb eines Standortverfolgungsgebiets betreffen, wobei jeder Funkmessbericht einen Übertragungszyklusindex, der einen Übertragungszyklus eines Referenzsignals anzeigt, das mit dem Funkmessbericht verknüpft ist, und eine Funkmessmetrik, die aus dem Referenzsignal berechnet wird, das mit dem Funkmessbericht verknüpft ist, umfasst;
**dadurch gekennzeichnet, dass** das mobile Tag und der mindestens eine Standortverfolgungsknoten gemäß Bluetoothtechnologie betrieben werden und der Funkmessbericht eine Kennung eines Senders und eine Kennung eines Empfängers eines Referenzsignals, das mit dem Funkmessbericht verknüpft ist, umfasst und das Verfahren ferner Folgendes umfasst:
Kombinieren (302) von Funkmessberichten mit demselben Übertragungszyklusindex, derselben Senderkennung und derselben Empfängerkennung nach einem Ablauf eines Timers, der eine Erfassungsperiode zählt, die eine maximale Dauer definiert, die für die Erfassung der Vielzahl von Messberichten erlaubt ist;
Verwerfen von Funkmessberichten, die nach dem Ablauf des Timers empfangen werden und denselben Übertragungszyklusindex wie die kombinierten aufweist; und
Verwenden der kombinierten Funkmessberichte beim Verfolgen des Standorts des mobilen Tags.

2. Verfahren nach Anspruch 1, wobei jeder Funkmessbericht ferner eine Kennung eines mobilen Tags umfasst, wobei das Verfahren ferner das Kombinieren der Funkmessmetriken, die in Funkmessberichten mit derselben Kennung des mobilen Tags enthalten sind, umfasst.

3. Verfahren nach Anspruch 1 oder 2, wobei jeder Funkmessbericht ferner einen Kanalindex umfasst, der anzeigt, auf welchem Kanal das Referenzsignal, das mit dem Funkmessbericht verknüpft ist, übertragen wurde, wobei das Verfahren ferner das Kombinieren der Funkmessmetriken, die in Funkmessberichten mit demselben Kanalindex enthalten sind, umfasst.

4. Verfahren nach einem der vorhergehenden Ansprüche, wobei die Referenzsignale mit einer variablen Sendeleistung übertragen werden, derart, dass die Sendeleistung zwischen Zyklusphasen jedes Übertragungszyklus variiert, und wobei jeder Funkmessbericht ferner einen Zyklusphasenindex umfasst, der eine Phase im Übertragungszyklus anzeigt, der vom Übertragungszyklusindex angezeigt wird, wobei das Verfahren ferner das Kombinieren der Funkmessmetriken, die in Funkmessberichten mit demselben Zyklusphasenindex enthalten sind, umfasst.

5. Verfahren nach Anspruch 1 oder 2, wobei die Referenzsignale mit einer variablen Sendeleistung übertragen werden, derart, dass die Sendeleistung innerhalb des Übertragungszyklus variiert, und wobei jeder Funkmessbericht ferner einen Kanalindex umfasst, der anzeigt, auf welchem Kanal das Referenzsignal, das mit dem Funkmessbericht verknüpft ist, übertragen wurde, wobei das Verfahren ferner das Kombinieren der Funkmessmetriken, die in Funkmessberichten enthalten sind, die denselben Kanalindex aufweisen und mit verschiedenen Übertragungsleistungen verknüpft sind, umfasst.

6. Verfahren nach einem der vorhergehenden Ansprüche, wobei die Funkmessmetrik mindestens eines von Folgendem umfasst: eine Empfangssignalstärkeanzeige, eine Pfadverlustschätzung und ein Signal-Rauschen-Verhältnis.

7. Verfahren nach einem der vorhergehenden Ansprüche, wobei die Dauer des Übertragungszyklus zwischen 100 Millisekunden und zwei Sekunden liegt.

8. Verfahren nach einem der vorhergehenden Ansprüche, wobei die kombinierten Funkmessmetriken beim Schätzen eines Standorts des mobilen Tags, Schätzen einer Geschwindigkeit des mobilen Tags und/oder Auslegen von Betriebsparametern mindestens eines Standortverfolgungsknotens und/oder mindestens eines mobilen Tags verwendet werden.

9. Verfahren nach einem der vorhergehenden Ansprüche, wobei das Referenzsignal mit einem Übertragungssequenzindex verknüpft ist, der ein Übertragungsmuster des Referenzsignals definiert, und wobei der Funkmessbericht den Übertragungssequenzindex umfasst, wobei das Verfahren ferner das Durchführen des Kombinierens der Funkmessberichte unter Verwendung des Übertragungssequenzindex umfasst.

10. Verfahren nach einem der vorhergehenden Ansprüche, wobei der Funkmessbericht außerdem ein Übertragungstiming des Referenzsignals, das mit dem Funkmessbericht verknüpft ist, in Form des Übertragungszyklusindex, des Kanalindex, des Übertragungssequenzindex und/oder des Übertragungszyklusphasenindex anzeigt, wobei das Verfahren ferner das Kombinieren der Funkmessberichte, die mit demselben Übertragungstiming verknüpft sind, und das Schätzen einer Geschwindigkeit des mobilen Tags auf Basis der kombinierten Funkmessberichte umfasst.

11. Standortverfolgungsvorrichtung, die Folgendes umfasst:
mindestens einen Prozessor (50); und
mindestens einen Speicher (60), der einen Computerprogrammcode beinhaltet, **dadurch gekennzeichnet, dass** der mindestens eine Speicher und der Computerprogrammcode dazu ausgelegt sind, die Standortverfolgungsvorrichtung mit dem mindestens einen Prozessor zu veranlassen, die Schritte nach einem der vorhergehenden Ansprüche 1 bis 10 durchzuführen.

12. Computerprogrammprodukt, das auf einem Verteilungsmedium enthalten ist, das von einem Computer lesbar ist und Programmanweisungen umfasst, die, wenn sie in eine Vorrichtung geladen werden, das Verfahren gemäß einem der vorhergehenden Ansprüche 1 bis 10 ausführen.

## Revendications

1. Procédé pour traiter des rapports de mesure radio dans un appareil de suivi d'emplacement (204), le procédé comprenant :
l'acquisition (300) d'une pluralité de rapports de mesure radio relatifs à la transmission de signaux de référence entre une étiquette mobile (120, 124) faisant l'objet d'un suivi et au moins un nœud de suivi d'emplacement (100, 102, 104, 106, 108, 110, 112) ayant un emplacement fixe dans une zone de suivi d'emplacement, dans lequel chaque rapport de mesure radio comprend un indice de cycle de transmission indiquant un cycle de transmission d'un signal de référence associé au rapport de mesure radio et une métrique de mesure radio calculée à partir dudit signal de référence associé au rapport de mesure radio ;
**caractérisé en ce que** l'étiquette mobile et l'au moins un nœud de suivi d'emplacement fonctionnent selon la technologie Bluetooth, et le rapport de mesure radio comprend un identifiant d'un émetteur et un identifiant d'un récepteur d'un signal de référence associé au rapport de mesure radio, et le procédé comprenant en outre :
la combinaison (302), après une expiration d'un temporisateur comptant une période d'acquisition définissant une durée maximale autorisée pour l'acquisition de la pluralité de rapports de mesure, de rapports de mesure radio ayant le même indice de cycle de transmission, le même identifiant d'émetteur et le même identifiant de récepteur ;
le rejet de tout rapport de mesure radio reçu après l'expiration du temporisateur et ayant le même indice de cycle de transmission que ceux qui sont combinés ; et
l'utilisation des rapports de mesure radio combinés pour suivre l'emplacement de l'étiquette mobile.

2. Procédé de la revendication 1, dans lequel chaque rapport de mesure radio comprend en outre un identifiant d'une étiquette mobile, le procédé comprenant en outre la combinaison des métriques de mesures radio contenues dans des rapports de mesure radio ayant le même identifiant de l'étiquette mobile.

3. Procédé de la revendication 1 ou 2, dans lequel chaque rapport de mesure radio comprend en outre un indice de canal indiquant sur quel canal le signal de référence associé au rapport de mesure radio a été transmis, le procédé comprenant en outre la combinaison des métriques de mesures radio contenues dans des rapports de mesure radio ayant le même indice de canal.

4. Procédé de l'une quelconque des revendications précédentes, dans lequel les signaux de référence sont transmis avec une puissance de transmission variable de sorte que la puissance de transmission varie entre des phases de cycle de chaque cycle de transmission, et dans lequel chaque rapport de mesure radio comprend en outre un indice de phase de cycle indiquant une phase dans le cycle de transmission indiqué par l'indice de cycle de transmission, le procédé comprenant en outre la combinaison des métriques de mesures radio contenues dans des rapports de mesure radio ayant le même indice de phase de cycle.

5. Procédé de la revendication 1 ou 2, dans lequel les signaux de référence sont transmis avec une puissance de transmission variable de sorte que la puissance de transmission varie dans le cycle de transmission, et dans lequel chaque rapport de mesure radio comprend en outre un indice de canal indiquant sur quel canal le signal de référence associé au rapport de mesure radio a été transmis, le procédé comprenant en outre la combinaison des métriques de mesures radio contenues dans des rapports de mesure radio ayant le même indice de canal et associés à différentes puissances de transmission.

6. Procédé de l'une quelconque des revendications précédentes, dans lequel la métrique de mesure radio comprend au moins l'un des éléments suivants : un indicateur de force de signal reçu, une estimation d'affaiblissement de propagation et un rapport signal/bruit.

7. Procédé de l'une quelconque des revendications précédentes, dans lequel la durée du cycle de transmission est entre 100 millisecondes et deux secondes.

8. Procédé de l'une quelconque des revendications précédentes, dans lequel les métriques de mesures radio combinées sont utilisées pour estimer l'emplacement de l'étiquette mobile, estimer une vitesse de l'étiquette mobile, et/ou configurer des paramètres de fonctionnement d'au moins un nœud de suivi d'emplacement et/ou d'au moins une étiquette mobile.

9. Procédé de l'une quelconque des revendications précédentes, dans lequel le signal de référence est associé à un indice de séquence de transmission définissant un modèle de transmission du signal de référence, et dans lequel le rapport de mesure radio comprend l'indice de séquence de transmission, le procédé comprenant en outre la réalisation de la combinaison des rapports de mesure radio en utilisant l'indice de séquence de transmission.

10. Procédé de l'une quelconque des revendications précédentes, dans lequel le rapport de mesure radio indique également un moment de transmission du signal de référence associé au rapport de mesure radio sous la forme de l'indice de cycle de transmission, de l'indice de canal, de l'indice de séquence de transmission, et/ou de l'indice de phase de cycle de transmission, le procédé comprenant en outre la combinaison des rapports de mesure radio associés au même moment de transmission et l'estimation d'une vitesse de l'étiquette mobile sur la base des rapports de mesure radio combinés.

11. Appareil de suivi d'emplacement comprenant :
au moins un processeur (50) ; et
au moins une mémoire (60) comportant un code de programme informatique,
**caractérisé en ce que** l'au moins une mémoire et le code de programme informatique sont configurés, avec l'au moins un processeur, pour amener l'appareil de suivi d'emplacement à réaliser les étapes de l'une quelconque des revendications précédentes 1 à 10.

12. Produit de programme informatique intégré sur un support de distribution lisible par un ordinateur et comprenant des instructions de programme qui, lorsqu'elles sont chargées dans un appareil, exécutent le procédé selon l'une quelconque des revendications précédentes 1 à 10.
